# EUROPEAN PATENT APPLICATION

(11) **EP 4 462 912 A1**
(43) Date of publication of application: **13.11.2024**
(21) Application number: 23737101.8
(22) Date of filing: 05.01.2023
(51) Int. Cl.: H04W 72/04

(54) **GAP INFORMATION TRANSMISSION METHOD AND APPARATUS AND NETWORK SIDE DEVICE**

(30) Priority: 07.01.2022 CN 202210016653
(71) Applicant: VIVO MOBILE COMMUNICATION CO., LTD., Dongguan, Guangdong 523863 (CN)
(72) Inventor: LIU, Xuanbing, Dongguan, Guangdong 523863 (CN); YANG, Xiaodong, Dongguan, Guangdong 523863 (CN)
(74) Representative: Lavoix
(86) International application number: PCT/CN2023/070697
(87) International publication number: WO 2023/131239

(57) **Abstract**

This application discloses a gap information transmission method and apparatus and a network side device, relates to the field of communication technologies. The gap information transmission method in embodiments of this application includes: A first node sends gap information to a second node, where the gap information includes at least one of gap status information and gap type information.

## Description

### CROSS-REFERENCE TO RELATED APPLICATION

This application claims priority to Chinese Patent Application No.202210016653.3 filed on January 07, 2022, which is incorporated herein by reference in its entirety.

### TECHNICAL FIELD

This application relates to the field of communication technologies, and specifically, to a gap (Gap) information transmission method and apparatus and a network side device.

### BACKGROUND

In dual connectivity (Dual Connectivity, DC), a user equipment (User Equipment, UE) may access two network nodes, in which one network node is referred to as a master node (Master Node, MN), and the other network node is referred to as a secondary node (Secondary Node, SN). In each network node, a carrier aggregation (Carrier Aggregation, CA) technology is used, that is, a series of serving cells, also referred to as cell groups (cell group), controlled by the network node are configured for the UE. A cell group controlled by the MN is a master cell group (Master Cell Group, MCG), and a cell group controlled by the SN is a secondary cell group (Secondary Cell Group, SCG).

Furthermore, in a radio resource management (Radio Resource Management, RRM) measurement mechanism, the network configures a measurement gap (Measurement Gap, MG) for a UE (Per-UE) or a frequency range (per-FR) to meet measurement requirements of inter-frequency measurement and another type of measurement requiring a measurement gap.

In a related technology, according to a type of dual connectivity and an MG mode, one of the MN and the SN determines an MG configuration based on an obtained gap requirement. However, because the MN and the SN may respectively obtain different gap requirements, the MG configuration determined by one of the MN and the SN based on the obtained gap requirement may not match an actual gap requirement, resulting in a problem of low gap low utilization efficiency.

### SUMMARY

Embodiments of this application provide a gap information transmission method and apparatus and a network side device to resolve a problem of low gap low utilization efficiency caused by mismatch between an actual gap requirement and an MG configuration determined by one of an MN and an SN based on an obtained gap requirement in a related technology.

According to a first aspect, a gap information transmission method is provided. The method includes:
A first node sends gap information to a second node, where the gap information includes at least one of gap status information and gap type information.

According to a second aspect, a gap information transmission apparatus is provided, and is applied to a first node. The apparatus includes:
a sending module, configured to send gap information to a second node, where the gap information includes at least one of gap status information and gap type information.

According to a third aspect, a gap information transmission method is provided. The method includes:
A second node receives gap information from a first node, where the gap information includes at least one of gap status information and gap type information.

According to a fourth aspect, a gap information transmission apparatus is provided, and is applied to a second node. The apparatus includes:
a receiving module, configured to receive gap information from a first node, where the gap information includes at least one of gap status information and gap type information.

According to a fifth aspect, a network side device is provided. The network side device includes a processor and a memory. The memory stores a program or instructions that can be run on the processor. When the program or instructions are executed by the processor, a step of the method according to the first aspect or the third aspect is implemented.

According to a sixth aspect, a network side device is provided. The network side device includes a processor and a communication interface. In a case in which the network side device is a first node, the communication interface is configured to send gap information to a second node, where the gap information includes at least one of gap status information and gap type information; or in a case in which the network side device is a second node, the communication interface is configured to receive gap information from a first node, where the gap information includes at least one of gap status information and gap type information.

According to a seventh aspect, a wireless communication system is provided. The wireless communication system includes a first node and a second node. The first node may be configured to perform a step of the gap information transmission method according to the first aspect. The second node may be configured to perform a step of the gap information transmission method according to the third aspect.

According to an eighth aspect, a readable storage medium is provided. The readable storage medium stores a program or instructions, and when the program or instructions are executed by the processor, a step of the method according to the first aspect is implemented, or a step of the method according to the third aspect is implemented.

According to a ninth aspect, a chip is provided. The chip includes a processor and a communication interface. The communication interface is coupled to the processor. The processor is configured to run a program or instructions to implement the method according to the first aspect or implement the method according to the third aspect.

According to a tenth aspect, a computer program/program product is provided. The computer program/program product is stored in a storage medium. The computer program/program product is executed by at least one processor to implement a step of the gap information transmission method according to the first aspect or the third aspect.

According to an eleventh aspect, a communication device is provided. The communication device is configured to perform a step of the method according to the first aspect or a step of the method according to the third aspect.

In the embodiments of this application, a first node sends gap information to a second node, where the gap information includes at least one of gap status information and gap type information. In this way, the second node can obtain a more comprehensive gap requirement based on the gap information from the first node. Further, if an MG is configured based on the more comprehensive gap requirement, the configured MG can better conform to an actual requirement, thereby improving gap utilization efficiency.

### BRIEF DESCRIPTION OF DRAWINGS

FIG. 1 is a diagram of a structure of a wireless communication system to which an embodiment of this application can be applied;
FIG. 2 is a diagram of an MG when an active BWP is switched;
FIG. 3 is a first flowchart of a gap information transmission method according to an embodiment of this application;
FIG. 4 is a second flowchart of a gap information transmission method according to an embodiment of this application;
FIG. 5 is a first diagram of a structure of a gap information transmission apparatus according to an embodiment of this application;
FIG. 6 is a second diagram of a structure of a gap information transmission apparatus according to an embodiment of this application;
FIG. 7 is a diagram of a structure of a communication device according to an embodiment of this application; and
FIG. 8 is a diagram of a structure of a network side device according to an embodiment of this application.

### DESCRIPTION OF EMBODIMENTS

The following clearly describes technical solutions in embodiments of this application with reference to the accompanying drawings in the embodiments of this application. Obviously, the described embodiments are a part rather than all of embodiments of this application. All other embodiments obtained by a person of ordinary skill in the art based on the embodiments of this application shall fall within the protection scope of this application.

In the specification and claims of this application, the terms such as "first" and "second" are used to distinguish between similar objects but do not indicate a particular order or sequence. It is to be understood that the terms used in such ways are interchangeable under appropriate circumstances, so that the embodiments of this application can be implemented in sequences other than those illustrated or described herein. In addition, the objects distinguished by "first" and "second" are usually of the same type, and a quantity of objects is not limited. For example, there may be one or a plurality of first objects. In addition, "and/or" used in this specification and the claims indicates at least one of the connected objects. The character "/" generally indicates an "or" relationship between associated objects.

It should be noted that the technologies described in the embodiments of this application are not limited to a long term evolution (Long Term Evolution, LTE)/LTE-advanced (LTE-Advanced, LTE-A) system, and may further be applied to other wireless communication systems, for example, a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" in the embodiments of this application are often used interchangeably, and the described technologies not only can be applied to the foregoing systems and wireless technologies, but also can be applied to other systems and wireless technologies. The following describes a new radio (New Radio, NR) system for an illustration purpose, and NR terminologies are used in most of the following descriptions, but these technologies may also be applied to an application other than an NR system application, for example, a 6^{th} generation (6^{th} Generation, 6G) communication system.

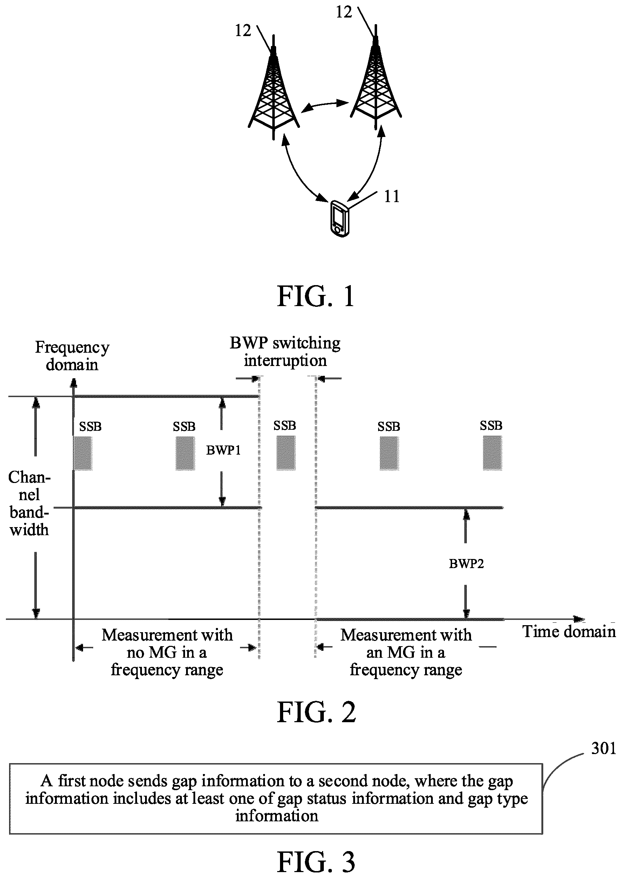

FIG. 1 is a block diagram of a wireless communication system to which an embodiment of this application can be applied. The wireless communication system includes a terminal 11 and a network side device 12. The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile internet device (Mobile Internet Device, MID), an augmented reality (Augmented Reality, AR)/a virtual reality (Virtual Reality, VR) device, a robot, a wearable device (Wearable Device), a vehicle user equipment (Vehicle User Equipment, VUE), a pedestrian user equipment (Pedestrian User Equipment, PUE), a smart household (a home device having a wireless communication function, such as a refrigerator, a television, a washing machine, or furniture), a game machine, a personal computer (Personal Computer, PC), a teller machine, or a self-service machine. Wearable devices include: a smart watch, a smart bracelet, a smart headset, smart glasses, smart jewelry (a smart bangle, a smart brace lace, a smart ring, a smart necklace, a smart anklet, or a smart ankle chain), a smart wristband, and smart clothing. It should be noted that a specific type of the terminal 11 is not limited in this embodiment of this application. The network side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Networks, WLAN) access point, a wireless fidelity (Wireless Fidelity, Wi-Fi) node, or the like. The base station may be referred to as a NodeB, an evolved NodeB (eNB), an access point, a base transceiver station (Base Transceiver Station, BTS), a radio station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the field. The base station is not limited to a particular term provided that a same technical effect can be achieved. It should be noted that in this embodiment of this application, the base station in the NR system is merely used as an example for description, and a specific type of the base station is not limited.

In Rel-15/16 NR RRM measurement (where synchronization signal block (Synchronization Signal Block, SSB) measurement is used as an example), if an active (active) BWP does not include a target SSB, a measurement gap (Measurement Gap, MG) is required based on the SSB measurement. As shown in FIG. 2, if BWP switching occurs during the SSB measurement, a measurement periodicity is divided into two parts: measurement without an MG before the BWP switching and measurement with an MG after the BWP switching. However, the MG is configured by using RRC signaling, and the BWP switching may be implemented by using a downlink control information (Downlink Control Information, DCI) command. Therefore, relatively, the BWP switching is more dynamic or has a shorter delay than the MG configuration. In this way, because the BWP switching has a shorter delay (that is, is dynamic), and the MG configuration/de-configuration has a longer delay (that is, is relatively static), it is very difficult for a network to configure/de-configure the MG based on the BWP switching. Therefore, the network may always configure the MG for SSB-based measurement, resulting in a throughput loss on a network and UE side. Specifically, a reason of the throughput loss is that some MGs are unnecessary for the SSB-based measurement. For example, in FIG. 2, when an active BWP of a UE is a BWP1, the UE does not need to perform same-frequency measurement on an MG. However, the MG may have been configured by using RRC signaling before switching to the BWP1, and the MG cannot be flexibly canceled. Consequently, the MG persists in BWP1 duration. Further, the UE cannot receive or send data in MG duration, causing an unnecessary throughput loss.

To overcome the foregoing problem of the throughput loss of the UE, in a related technology, MG configuration efficiency between the UE and a gNB is improved by using a pre-configured measurement gap (Pre-configured Measurement Gap, Pre-configured MG).

For the pre-configured MG, because a serving gNB can learn of all SSB configurations and BWP configurations, the serving gNB can learn whether the UE requires the MG on each BWP (for example, if an SSB is included in a BWP frequency domain range, the MG is not required; or if the SSB is not included in the BWP frequency domain range, the MG is required). The serving gNB may pre-configure a corresponding MG based on configuration information of an SSB. However, the MG may be activated based on actual usage of the active BWP. For example, as shown in FIG. 2, if the SSB is included in the active BWP (for example, the BWP1), a state of the corresponding MG is "deactivated (deactivated)"; if the SSB is not included in the active BWP (a BWP2), the state of the corresponding MG is "activated (activated)"; or if the UE switches the BWP, to be specific, switches, from the BWP 1 to the BWP2, the state of the MG changes from "deactivated" to "activated". That is, the MG activation/deactivation is triggered based the BWP switching.

With development of wireless communication technologies, the UE may be connected to at least two access nodes, for example, DC connection. In this case, either the MN or the SN determines a gap configuration of the UE.

Specifically, in an existing NR system, two types of measurement gaps are specified: gaps for a UE (per-UE) and gaps for an FR (per-FR).

For the gaps of per-FR, separate gap modes are defined for an FR1 and an FR2, which are FR1 gap and FR2 gap.

The gaps of per-UE are applicable to the FR1 and the FR2. The FR1 is applicable to an evolved universal terrestrial radio access (Evolved Universal Terrestrial Radio Access, E-UTRA) network and an NR network. The FR2 is applicable to the NR network.

During implementation, in different multi-RAT dual connectivity (Multi-RAT Dual Connectivity, MR-DC) scenarios, one of the MN and the SN determines a gap mode.

Dual connectivity (Dual Connectivity, DC) means that a user equipment (User Equipment, UE) may access two network nodes, in which one network node is referred to as a master node (Master Node, MN), and the other network node is referred to as a secondary node (Secondary Node, SN). In each network node, a carrier aggregation (Carrier Aggregation, CA) technology is used, that is, a series of serving cells, also referred to as cell groups (cell group), controlled by the network node are configured for the UE. A cell group controlled by the MN is a master cell group (Master Cell Group, MCG), and a cell group controlled by the SN is a secondary cell group (Secondary Cell Group, SCG). Each cell group includes a special cell (Special Cell, SpCell) and a series of secondary cells (Secondary Cell, Scell). A special cell in the MCG is referred to as a primary cell (Primary Cell, PCell). A special cell in the SCG is referred to as a primary secondary cell (Primary Secondary Cell, PSCell). In a cell group, the SpCell uses a primary carrier, and another Scell uses a secondary carrier. In addition, resource scheduling in a cell group is performed by the SpCell.

For different types of MR-DC and different gap modes, a corresponding MN or SN determines a gap configuration. For gaps of per-UE and per-FR1, in EN-DC, NGEN-DC, NE-DC, and NR-DC, the MN determines a gap mode, and the MN is also responsible for providing the gap mode for the UE by using radio resource control (Radio Resource Control, RRC) signaling of the MN.

In addition, for the gap of per-FR2, in EN-DC and NGEN-DC, the SN (NR) determines a gap mode of the FR2; and in NE-DC and NR-DC, the MN (NR) determines the gap mode of the FR2 and a related gap shared configuration.

As can be learned from the above, in the related technology, if the gap of per-UE is used, the MN determines the gap mode and the related gap shared configuration. If the gap of per-FR is used, in EN-DC and NGEN-DC, the MN determines an FR1 gap mode of the FR1 and a related gap shared configuration, and the SN determines an FR2 gap mode of the FR2 and a related gap shared configuration; and in NE-DC and NR-DC, the MN determines gap modes of the FR1 and the FR2 and related gap shared configurations.

Specifically, in EN-DC and NGEN-DC, a measurement gap configuration sent by the MN to the UE may be used to indicate whether a configuration from the MN is a configuration of the gap of per-UE or a configuration of a gap of per-FR1. Besides, the MN further indicates, to the SN, the configured measurement gap mode and the configured gap purpose (gap purpose, for example, per-UE or per-FR1) of per-UE or per-FR1. In addition, measurement gap configuration auxiliary information may be exchanged between the MN and the SN. For the gap of per-UE, the SN indicates, to the MN, a list of SN configuration frequencies in the FR1 and the FR2 that are measured by the UE. For the gap of per-FR, the SN indicates, to the MN, the list of the SN configuration frequencies in the FR1 measured by the UE; and the MN indicates, to the SN, a list of MN configuration frequencies in the FR2 measured by the UE.

In NE-DC, the MN indicates the configured measurement gap mode of per-UE or per-FR1 to the SN. Before this, the SN may provide a gap request for the MN without indicating any list of frequencies.

In NR-DC, the MN indicates, to the SN, a configured measurement gap mode and a configured gap purpose of per-UE, per-FR1, or per-FR2. Before this, the SN may indicate, to the MN, the list of the SN configuration frequencies in the FR1 and the FR2 that are measured by the UE.

However, when MR-DC is combined with a pre-configured MG, a gap activation status (activated or deactivated) is not transmitted between the MN and the SN. For example, the SN may learn of a measurement gap configuration, but does not learn of the activation status (activated or deactivated) of a measurement gap. The measurement gap includes a pre-configured MG of per-UE. In this way, the SN may obtain an incorrect or impractical result in a process of, for example, determining a gap occasion conflict and a gap configuration because the SN cannot obtain the activation status of the measurement gap. Consequently, gap states determined by the MN and the SN are inconsistent, reducing gap utilization efficiency, and causing unnecessary throughput losses of the UE and the network side device.

In this embodiment of this application, the MN may be enabled to notify the SN of an activation status of the measurement gap based on an interaction between the MN and the SN, to improve the gap utilization efficiency and measurement accuracy, and reduce the unnecessary throughput losses of the UE and the network side device.

With reference to the accompanying drawings, the gap information transmission method, the gap information transmission apparatus, and the network side device that are provided in the embodiments of this application are described in detail below by using some embodiments and application scenarios.

FIG. 3 shows a first gap information transmission method according to an embodiment of this application. The method may be performed by a first node. As shown in FIG. 3, the first gap information transmission method may include the following steps.

Step 301: The first node sends gap information to a second node, where the gap information includes at least one of gap status information and gap type information.

During implementation, the first node and the second node may be network side nodes communicatively connected to a same terminal (or UE), and the second node may be configured to: configure a measurement gap of the terminal, or determine a gap state (an activated state or a deactivated state, being a dynamic gap, or the like) based the measurement gap, and further, may determine, based on the gap state of the measurement gap, whether there is an activated gap occasion, whether there is a gap conflict, whether the measurement gap needs to be ignored or dropped if there is a gap conflict, and whether data can be transmitted in duration of the measurement gap.

In addition, the first node and the second node may separately obtain respective gap information. The first node sends the gap information obtained by the first node to the second node, so that the second node can obtain more comprehensive gap information, and further, the gap configuration/gap state determined by the second node is more practical, thereby improving the gap utilization efficiency and the measurement accuracy, and reducing the unnecessary throughput losses of the UE and the network side device.

In an optional implementation, the first node is one of an MN and at least one SN, and the second node is the other of the MN and the at least one SN; or
the first node is one of a control unit (Control Unit, CU) and at least one data unit (Data unit, DU), and the second node is the other of the CU and the at least one DU.

For ease of description, an example in which the first node is one of the MN and the at least one SN and the second node is the other of the MN and the at least one SN is used in the following embodiments to described the interaction between the MN and the SN. In the case in which the first node is one of the CU and the at least one DU and the second node is the other of the CU and the at least one DU, for the interaction between the CU and the DU, refer to the interaction between the MN and the SN. Details are not specifically described herein.

In an optional implementation, the gap status information includes at least one of the following:
a gap state; and
gap-related configuration information, where
the gap state is used to indicate an activated or a deactivated state of a target gap, or the gap state is used to indicate that the target gap is a dynamic gap; and
the target gap is a gap configured by the first node, or the target gap is a gap configured by the second node under a request of the first node.

During implementation, the dynamic gap indicates that the gap state may be activated or deactivated. For example, when any measurement requires a gap, the gap is in the activated state; or otherwise, the gap is in the deactivated state. The measurement may be measurement associated with the gap, and the association may be configured by using a measurement frequency, a measurement object, or an association indication. In a related technology, a gap state of a dynamic gap configured by the first node may be the activated state or the deactivated state, but the second node does not learn of the gap state. Consequently, gap states determined by the first node and the second node are inconsistent, affecting a data transmission rate and a data throughput. In this embodiment of this application, with reference to the foregoing description that the gap state is used to indicate the activated/deactivated state of the target gap, the second node may determine, based on the gap state, whether the target gap is in the activated state or the deactivated state. Further, based on the activated/deactivated state of the target gap, the second node can use a gap, determine a conflict, determine whether to drop a gap, determine whether to transmit data during a gap, and so on, thereby improving gap utilization.

Specifically, the gap state may include at least one of the following:
first state information, used to indicate whether the target gap is a pre-configured gap;
second state information, used to indicate whether the target gap is a dynamic gap;
third state information, used to indicate whether the target gap is droppable;
fourth state information, used to indicate a transmission state during the target gap;
a first gap state, used to indicate a real-time activated/deactivated state of the target gap; and
a second gap state, used to indicate an initial activated/deactivated state of the target gap.

Option 1: Similar to the pre-configured MG, the foregoing pre-configured gap (Pre-configured gap) may be a gap pre-configured by the first node based on a measurement requirement of the terminal, and activation/deactivation of the pre-configured gap may be triggered based on the measurement requirement. The measurement requirement may include BWP switching (for example, in a case in which an active BWP includes a target SSB, no gap needs to be configured; and in a case in which the active BWP does not include the target SSB, a gap needs to be configured), and may further include another measurement requirement. This is not specifically limited herein.

Option 2: The foregoing dynamic gap indicates that the gap state may be activated or deactivated.

Option 3: The foregoing third state information may be a drop (Drop) indication, and whether the target gap can be dropped may be determined based on the indication.

Option 4: The foregoing fourth state information may indicate whether data can be transmitted in all or part of duration of the target gap. If data can be transmitted in the duration of the target gap, data may be transmitted between the terminal and the network side device to improve the data throughput.

Further, the foregoing fourth state information may further indicate whether data can be transmitted when there is a gap conflict, when a gap is dropped, or when a gap is deactivated. In this way, when there is a gap conflict, when the gap is dropped, or when the gap is deactivated, the data throughput of the terminal and the network side device can further be improved.

Option 5 and option 6: The foregoing first gap state and the foregoing second gap state may be respectively used to indicate the real-time and initial activated/deactivated states of the target gap. In this way, whether the target gap is currently in the activated state or the deactivated state can be determined based on the real-time activated/deactivated state of the target gap. Besides, an initial state of the target gap can be determined based on the initial activated/deactivated state of the target gap. In this way, the second node can preferentially configure the target gap based on the initial state.

In addition, the second node may alternatively determine the activated/deactivated state of the target gap based on the gap-related configuration information. The gap-related configuration information may include at least one of the following:
a measurement frequency associated with the target gap;
a measurement object associated with the target gap;
a gap purpose of the target gap, where the gap purpose includes: per-user equipment (per-UE), per-frequency range 1 (per-FR1), per-frequency range 2 (per-FR2), per-cell group (per-CG), or a gap related to a secondary cell group SCG;
gap configuration information (that is, a gap pattern) of the target gap;
an identifier of the target gap; and
a priority of the target gap.

It should be noted that, in the related technology, the gap purpose is only classified into per-UE and per-FR. In this embodiment of this application, the gap purpose includes per-UE, per-FR1, per-FR2, per-CG, and the gap related to the SCG. In this way, the second node can determine more accurate and detailed gap usage based on the gap purpose.

During implementation, there may be one or at least two target gaps. For example, the target gap includes at least one dynamic gap or at least two pre-configured MGs. In this case, each target gap may be identified by using an identifier of the target gap.

In addition, different target gaps may be configured with different priorities. In this way, the priority may be used to assist the second node to determine a gap type. For example, the second node requests the first node to configure a gap with a high priority, so that the first node configures an associated gap. In addition, when occasions of at least two gaps conflict, the second node may further determine, based on priorities, the gap (the gap with a higher priority) to be used, and ignore another gap (the gap with a lower priority).

It should be noted that, for meanings of the measurement frequency associated with the target gap, the measurement object associated with the target gap, and the gap configuration information of the target gap, respectively refer to meanings of the measurement frequency, the measurement object, and the gap configuration information in the related technology. A difference between this embodiment of this application and the related technology is that the first node and the second node may exchange the measurement frequency associated with the target gap, the measurement object associated with the target gap, and the gap configuration information of the target gap, so that the second node can configure a gap more accurately based on the foregoing gap-related configuration information, for example, configure an association relationship between measurement and a gap by using the measurement frequency, the measurement object, or the association indication. Further, the second node may further determine a status of the target gap based on the measurement frequency associated with the target gap, the measurement object associated with the target gap, and the gap configuration information of the target gap. For example, for the dynamic gap configured by the first node, when measurement requires a gap, the second node may determine that the dynamic gap associated with the measurement is in the activated state; or otherwise, the second node may determine that the dynamic gap associated with the measurement is in the deactivated state. The meanings of the measurement frequency associated with the target gap, the measurement object associated with the target gap, and the gap configuration information of the target gap are not described in detail herein.

In an optional implementation, the gap type information may include at least one of the following:
a to-be-configured gap type;
an association indication, used to indicate whether to associate the target gap with an association object or at least one measurement frequency;
an association object, where the association object includes at least one of the following: a radio access technology RAT (for example, LTE, a second generation (2^{nd} Generation, 2G) communication system, a third generation (3^{rd} Generation, 3G) communication system, and NR, which are not exhaustively listed herein), positioning (positioning) or positioning reference signal (Position Reference Signal, PRS), and multi IMSI;
a gap priority; and
a to-be-configured gap purpose, where the gap purpose includes: per-user equipment per-UE, per-frequency range 1 per-FR1, per-frequency range 2 per-FR2, per-cell group (per-Cell group, per-CG), or a gap related to a secondary cell group SCG.

Option 1: The to-be-configured gap type may include at least one of the following:
a pre-configured gap, where the pre-configured gap may be a pre-configured gap mode of each configured BWP, a pre-configured gap mode of positioning measurement, or a pre-configured gap mode of another measurement object, that is, a rapid gap configuration; and a configuration process and an activation/deactivation process thereof are similar to those of the pre-configured MG, and details are not described herein again;
a coexisting gap or a gap configured with an association relationship;
a network controlled small gap (Network Controlled Small Gap, NCSG);
an autonomous gap (Autonomous Gap);
a gap used for positioning measurement (Positioning Gap);
a gap used for a multi IMSI purpose;
an uplink gap (Uplink Gap), where the terminal stops uplink sending during an uplink gap; and
a measurement gap, where the measurement gap is relative to the coexisting gap or the gap configured with an association relationship, and the measurement gap may not be configured with an association.

During implementation, the coexisting gap or the gap configured with an association relationship may be at least two concurrent and independent gap templates. During implementation, at least two concurrent and independent gap templates may be configured to enhance a gap, and these concurrent and independent gap templates may be associated with one or more measurement targets. Specifically, these concurrent and independent gap templates may be associated with at least one of the following association objects:
an RAT, for example, LTE, 2G, 3G, or NR;
positioning (positioning) or a positioning reference signal (PRS); and
multi IMSI.

One concurrent gap in the at least two concurrent and independent gap templates may be purely used to measure LTE, and another gap may be used for another mobile original (Mobile Originals, MOs). For example, one gap is related only to LTE measurement, and another gap is related to other measurement (including NR).

For example, if it is assumed that the first node is an SN and the second node is an MN, in a case in which the MN configures a measurement gap for a UE, the SN may notify the MN that one or more concurrent gaps (concurrent gap) are required. For example, if the SN determines a configuration of FR2 measurement, when a normal measurement gap cannot meet a measurement requirement, a concurrent gap is required to ensure the FR2 measurement. Therefore, the SN requests the MN to configure a concurrent gap for the UE.

Furthermore, in addition to the pre-configured gap, the coexisting gap, or the gap configured with an association relationship, a gap can also be enhanced by using a network controlled small gap (Network Controlled Small Gap, NCSG). The NCSG is similar to the NCSG used to enhance the MG in the related technology. Details are not described herein again.

Option 2: The association indication may be used to indicate whether the target gap needs to be associated with the association object or the at least one measurement frequency, for example, associated with a to-be-measured frequency or association object (for example, a measurement frequency list). In this way, the second node may determine, based on the association indication, whether the gap configuration is a concurrent gap.

Option 3: The association object may be the RAT, positioning or the PRS, or the multi IMSI illustrated above.

It should be noted that the multi IMSI in this embodiment of this application may include a multi subscriber identity module (Multi Subscriber Identity Module, Multi-SIM) or a multi universal subscriber identity module (Multi Universal Subscriber Identity Module, Multi-USIM), collectively referred to as MUSIM below for ease of description.

During implementation, the multi IMSI gap may be used for a SIM card task of a multi IMSI terminal. The multi IMSI terminal may include a plurality of UEs, and these UEs may be referred to as multi-SIM UEs or multi-USIM UEs. The UE may be considered as a subscription subject. In actual application, one terminal device may be configured with a plurality of subscription subjects, and the subscription subject may be embodied by using a SIM card or a USIM card. Usually, one SIM card corresponds to a subscription subject of one network, and the SIM card or the USIM card saves an identifier of a corresponding subscription subject, that is, an identifier of the UE, for example, a subscriber identity (Subscription Permanent Identifier, SUPI) or an international mobile subscription identity (International Mobile Subscription Identity, IMSI). Correspondingly, when a plurality of SIM cards are inserted on or a plurality of pieces of electronic SIM card information are configured for one terminal, it may be considered that the terminal and different subscription subjects may form different UEs. In this embodiment of this application, if one UE in the multi IMSI terminal may execute a task of another UE by using a gap, it may be considered that a purpose of the gap is a multi IMSI purpose.

Option 4: When there is a gap conflict, the second node may choose to reserve a gap with a high priority and ignore or drop a gap with a low priority based on the priority of the target gap.

Option 5: Among the foregoing to-be-configured gap purposes, in addition to per-UE, per-FR1, and per-FR2, per-CG and the gap related to the SCG may further be included. In this way, the second node can obtain a more precise gap purpose.

In an optional implementation, in a case in which the first node is the MN and the second node is the at least one SN, that a first node sends gap information to a second node includes:

The MN sends, to the at least one SN, gap information of a target gap configured by the MN for a terminal.

The gap information of the target gap may include a gap state (activated/deactivated or being a dynamic gap) of the target gap and/or the gap-related configuration information of the target gap. Meanings of the gap state and/or the gap-related configuration information are the same as meanings of the gap state and/or the gap-related configuration information provided in the foregoing embodiment. Details are not described herein again.

In this implementation, the MN determines the target gap configured for the terminal, and the MN further sends the gap information of the target gap to the SN accessed by the terminal. In this way, the MN indicates, to the SN, the configured gap mode, the configured gap purpose (per-UE, per-FR1, per-FR2, or the like), and the gap state (activated or deactivated), so that the SN can perform at least one of the following based on the gap information: determining the gap state (activated/deactivated or being a dynamic gap), determining a gap conflict, ignoring the target gap, dropping the target gap, transmitting data in duration of the target gap, and so on.

In a possible implementation, the gap information may be carried in a measurement gap configuration (measGapConfig).

For example, when establishing, modifying, or releasing an SCG, the MN sends, to an SN corresponding to the SCG, cell group configuration information (CG-Config Info) including information about a master node measurement configuration (measConfigMN). The measConfigMN includes the measGapConfig, and the measGapConfig may include gap status information (for example, the target gap is an activated (activated) or a deactivated (deactivated) gap) and/or gap type information.

In this implementation, by transmitting the gap information by reusing the measGapConfig used in the related technology to of indicate the target gap configured by the MN, signaling overheads between the MN and the SN can be reduced.

In another possible implementation, that the MN sends, to the at least one SN, gap information of a target gap configured by the MN for a terminal includes:

The MN sends a gap activation status message to the at least one SN, where the gap activation status message is used to indicate gap status information of the target gap configured by the MN for the terminal.

The foregoing gap status information may specifically indicate the activated/deactivated state of the target gap. In this way, the MN may notify, by using a gap activation status message, the SN of whether the target gap is an activated gap or a deactivated gap.

During implementation, the MN may send the gap activation status message to the at least one SN periodically or when a gap activation status of the target gap changes. An occasion of sending the gap activation status is not specifically limited herein.

Compared with the implementation of transmitting the gap information by reusing the measGapConfig, in this implementation, the MN sends the gap information to the SN by using another newly designed message, so that the gap information can be transmitted more flexibly.

It should be noted that during implementation, the MN may send the CG-Config Info information and the gap activation status message. For example, the MN sends the CG-Config Info information when establishing, modifying, or releasing the SCG. The CG-Config Info includes the measConfigMN information, and the measConfigMN includes a dynamic gap (for example, a positioning gap in the deactivated state) or a pre-configured gap (for example, a measurement configuration of per-BWP). After this, the MN may further send the gap activation status message to the SN.

During implementation, the gap activation status message may be sent when the gap activation status changes. In this way, real-time performance and effectiveness of the gap activation status message can be improved.

In addition, the MN may send a gap activation status message related to a specified gap type (for example, a positioning gap or an MUSIM gap). For a gap of another gap type, the gap activation status message may not be sent. In this way, pertinence and flexibility of the gap activation status message can be improved.

Optionally, the gap configured by the MN is a gap of a first gap purpose. The first gap purpose includes at least one of the following:
per-user equipment per-UE, per-frequency range 1 per-FR1, per-requency range 2 per-FR2, per-cell group per-CG, and a gap related to a secondary cell group SCG.

During implementation, the gap information may be transmitted by reusing the measGapConfig indicating a gap configuration of the first gap purpose configured by the MN.

In this implementation, the gap purpose of the gap configured by the MN may include at least one of per-UE, per-FR1, per-FR2, per-CG, and the gap related to the SCG. In this way, the MN may notify the SN of gap information of the gap of the gap purpose configured by the MN, so that the SN determines the activated/deactivated state of the gap of the gap purpose based on this.

Further, in NE-DC or NR-DC, a gap purpose of the target gap is per-UE, per-FR1, or per-FR2; and
in EN-DC or NGEN-DC, the gap purpose of the target gap is per-UE or per-FR1.

In this implementation, if it is assumed that the first node is the MN and the second node is the SN, in NE-DC or NR-DC, the MN determines a gap configuration with a gap purpose of per-UE, per-FR1, or per-FR2, and the MN is further responsible for notifying the SN of gap information (for example, the activated/deactivated state or the gap-related configuration information) about a gap whose gap purpose is per-UE, per-FR1, or per-FR2, so that the SN can determine, based on the gap information, the activated/deactivated state of the gap whose gap purpose is per-UE, per-FR1, or per-FR2.

Correspondingly, in a case in which the first node is the SN and the second node is the MN, in EN-DC or NGEN-DC, the gap purpose of the target gap configured under a request of the SN may be per-FR2, and the SN may send, to the MN, the gap information of the target gap configured under the request, so that the MN configures, based on the request of the SN, a gap meeting a requirement.

Optionally, in a case in which the first node is the SN and the second node is the MN, that a first node sends gap information to a second node includes:

The SN sends a cell group configuration CG-Config to the MN, where the cell group configuration carries gap information of a target gap configured for a terminal under a request of the SN.

A difference between this implementation and the foregoing implementation in which the MN sends the gap information of the target gap to the SN by using the CG-Config Info includes: In this implementation, the first node is the SN, the second node is the MN, and the SN provides the gap information for the MN by reusing the existing CG-Config. For a specific implementation, refer to the implementation in which the MN sends the gap information of the target gap to the SN by using the CG-Config Info. Details are not described herein again.

In this implementation, by sending gap information to the MN, the SN may notify the MN of the gap information of the gap configured by the SN, so that the MN determines a gap configuration based on the gap information; or by sending gap information to the MN, the SN may request the MN to configure a gap type required by the SN, configure a coexisting or an associated gap based on an requirement of the SN, configure a gap of a specified gap purpose based on a requirement of the SN, or so on.

Further, that a first node sends gap information to a second node includes:
in EN-DC, NGEN-DC, or NR-DC, the SN sends the gap type information to the MN by using a measConfigSN, where the CG-Config includes the measConfigSN.

During implementation, the measConfigSN may be included in the CG-Config.

This implementation is similar to the foregoing manner in which the MN sends the gap information to the SN by using the measConfigMN. A difference includes: In this implementation, the first node is the SN, the second node is the MN, the transmitted gap information includes the gap type information, and an information domain carrying the gap type information is the measConfigSN. In this way, in EN-DC, NGEN-DC, or NR-DC, the SN notifies the MN of the to-be-configured gap type, so that the MN can determine the gap configuration based on the gap type information. In other words, the SN can assist the MN to determine the gap configuration.

Correspondingly, in NE-DC, the SN sends the foregoing gap type information to the MN, and may request the MN to configure a required gap type for the terminal.

In actual application, the gap information may include the gap status information and the gap type information, and the gap status information and the gap type information may be separately transmitted between the first node and the second node by using different messages. For example, the gap status information is transmitted by using a gap activation status message, and the gap type information is included in gap configuration auxiliary information, where the gap configuration auxiliary information may include CG-Config information or measurement configuration information in CG-Config Info information.

In this embodiment of this application, gap information transmitted between network nodes includes a gap state, a required gap type, and the like, which can assist the network nodes to determine a gap configuration, an activation status of a gap, and the like, helping the network nodes in communicating a gap requirement, improving the gap utilization efficiency, and reducing the throughput losses of the network side device and the terminal caused by low gap utilization.

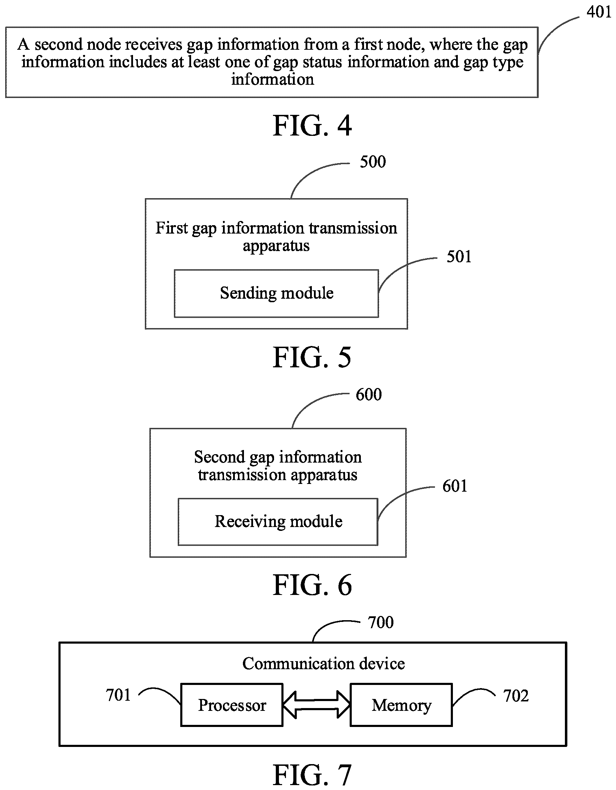

Refer to FIG. 4. An embodiment of this application provides a second gap information transmission method. The second gap information transmission method corresponds to the first gap information transmission method in the embodiment shown in FIG. 3. A difference is that the first gap information transmission method is performed by a first node, while the second gap information transmission method is performed by a second node. As shown in FIG. 4, the second gap information transmission method may include the following steps.

Step 401: The second node receives gap information from the first node, where the gap information includes at least one of gap status information and gap type information.

During implementation, the first node is the same as the corresponding first node in the embodiment shown in FIG. 3, and the second node is the same as the corresponding second node in the embodiment shown in FIG. 3.

In this embodiment of this application, the second node receives the gap information from the first node, further, may determine an activated/a deactivated state of a corresponding target gap based on the gap information, and/or may determine information such as a gap type of a to-be-configured target gap, and further determine a gap configuration based on this.

Optionally, the second gap information transmission method may further include:

The second node determines a gap state of a target gap and/or a gap configuration based on the gap information, where the target gap is a gap configured by the first node for a terminal or a gap configured for the terminal under a request of the first node.

Certainly, during implementation, the second node may further perform another operation based on the received gap information, for example, determine whether there is a conflict in the target gap, determine whether to ignore/drop the target gap when there is a conflict, or determine whether to transmit data during the target gap. This is not specifically limited herein.

Optionally, that the second node determines a gap state and/or a gap configuration based on the gap information includes:

The second node determines the gap configuration based on the gap type information; and/or
the second node performs at least one of the following operations based on the gap status information:
determining a gap state of the target gap, where the gap state includes any one of an activated state, a deactivated state, and a dynamic gap;
determining whether there is a conflict in the target gap;
ignoring the target gap;
dropping the target gap; and
transmitting data during the target gap.

During implementation, the determining the gap configuration based on the gap type information may be that the second node configures a gap of a corresponding type based on a to-be-configured gap type of the first node. For example, the MN configures a coexisting gap based on a request of the SN.

In addition, meanings of the determining a gap state of the target gap based on the gap status information, the determining whether there is a conflict in the target gap, the ignoring the target gap, the dropping the target gap, and the transmitting data during the target gap are the same as the processes performed by the second node based on the received gap status information in the embodiment shown in FIG. 3, and same beneficial effects can be achieved. Details are not described herein again.

Optionally, the first node is one of a master node MN and at least one secondary node SN, and the second node is the other of the MN and the at least one SN; or
the first node is one of a control unit CU and at least one data unit DU, and the second node is the other of the CU and the at least one DU.

Optionally, the gap status information includes at least one of the following:
a gap state; and
gap-related configuration information, where
the gap state is used to indicate an activated/a deactivated state of the target gap, or the gap state is used to indicate that the target gap is a dynamic gap; and
the target gap is a gap configured by the first node, or the target gap is a gap configured by the second node under a request of the first node.

In this implementation, meanings and functions of the gap state and the gap-related configuration information are respectively the same as meanings and functions of the gap state and the gap-related configuration information in the embodiment shown in FIG. 3. Details are not described herein again.

Optionally, the gap-related configuration information includes at least one of the following:
a measurement frequency associated with the target gap;
a measurement object associated with the target gap;
a gap purpose of the target gap, where the gap purpose includes: per-user equipment per-UE, per-frequency range 1 per-FR1, per-requency range 2 per-FR2, per-cell group per-CG, or a gap related to a secondary cell group SCG;
gap configuration information of the target gap;
an identifier of the target gap; and
a priority of the target gap.

In this implementation, the options in the gap-related configuration information and corresponding options in the gap-related configuration information in the method embodiment shown in FIG. 3 respectively have the same meanings and functions. Details are not described herein again.

Optionally, the gap state includes at least one of the following:
first state information, used to indicate whether the target gap is a pre-configured gap;
second state information, used to indicate whether the target gap is a dynamic gap;
third state information, used to indicate whether the target gap is droppable;
fourth state information, used to indicate a transmission state during the target gap;
a first gap state, used to indicate a real-time activated/deactivated state of the target gap; and
a second gap state, used to indicate an initial activated/deactivated state of the target gap.

In this implementation, the options in the gap state and corresponding options in the gap state in the method embodiment shown in FIG. 3 respectively have the same meanings and functions. Details are not described herein again.

Optionally, the gap type information includes at least one of the following:
a to-be-configured gap type;
an association indication, used to indicate whether to associate the target gap with an association object or at least one measurement frequency;
an association object, where the association object includes at least one of the following: a radio access technology RAT, positioning or a positioning reference signal PRS, and multi IMSI;
a gap priority; and
a to-be-configured gap purpose, where the gap purpose includes: per-user equipment per-UE, per-frequency range 1 per-FR1, per-requency range 2 per-FR2, per-cell group per-CG, or a gap related to a secondary cell group SCG.

In this implementation, the options in the gap type information and corresponding options in the gap type information in the method embodiment shown in FIG. 3 respectively have the same meanings and functions. Details are not described herein again.

Optionally, the to-be-configured gap type includes at least one of the following:
a pre-configured gap;
a coexisting gap or a gap configured with an association relationship;
a network controlled small gap;
an autonomous gap;
a gap used for positioning measurement;
a gap used for a multi IMSI purpose;
an uplink gap; and
a measurement gap.

In this implementation, the options in the to-be-configured gap type and corresponding options in the to-be-configured gap type in the method embodiment shown in FIG. 3 respectively have the same meanings and functions. Details are not described herein again.

In this embodiment of this application, the second node can assist nodes to determine a gap configuration, an activation status of a gap, and the like based on gap information (including a gap state, a required gap type, and the like) exchanged between the nodes, helping the network nodes in communicating a gap requirement, improving the gap utilization efficiency, and reducing the throughput losses of the network side device and the terminal caused by low gap utilization.

The first gap information transmission method provided in the embodiments of this application may be performed by a first gap information transmission apparatus. In the embodiments of this application, an example in which the first gap information transmission apparatus performs the first gap information transmission method is used to describe the first gap information transmission apparatus provided in the embodiments of this application.

Refer to FIG. 5. A first gap information transmission apparatus provided in an embodiment of this application may be applied to a first node. The first node may be the MN/SN or the CU/DU illustrated in FIG. 3, or may be a network node of another type. This is not specifically limited herein. As shown in FIG. 5, the first gap information transmission apparatus 500 may include the following module:

a sending module, configured to send gap information to a second node, where the gap information includes at least one of gap status information and gap type information.

Optionally, the first node is one of a master node MN and at least one secondary node SN, and the second node is the other of the MN and the at least one SN; or

the first node is one of a control unit CU and at least one data unit DU, and the second node is the other of the CU and the at least one DU.

Optionally, the gap status information includes at least one of the following:
a gap state; and
gap-related configuration information, where
the gap state is used to indicate an activated/a deactivated state of the target gap, or the gap state is used to indicate that the target gap is a dynamic gap; and
the target gap is a gap configured by the first node, or the target gap is a gap configured by the second node under a request of the first node.

Optionally, the gap-related configuration information includes at least one of the following:
a measurement frequency associated with the target gap;
a measurement object associated with the target gap;
a gap purpose of the target gap, where the gap purpose includes: per-user equipment per-UE, per-frequency range 1 per-FR1, per-requency range 2 per-FR2, per-cell group per-CG, or a gap related to a secondary cell group SCG;
gap configuration information of the target gap;
an identifier of the target gap; and
a priority of the target gap.

Optionally, the gap state includes at least one of the following:
first state information, used to indicate whether the target gap is a pre-configured gap;
second state information, used to indicate whether the target gap is a dynamic gap;
third state information, used to indicate whether the target gap is droppable;
fourth state information, used to indicate a transmission state during the target gap;
a first gap state, used to indicate a real-time activated/deactivated state of the target gap; and
a second gap state, used to indicate an initial activated/deactivated state of the target gap.

Optionally, the gap type information includes at least one of the following:
a to-be-configured gap type;
an association indication, used to indicate whether to associate the target gap with an association object or at least one measurement frequency;
an association object, where the association object includes at least one of the following: a radio access technology RAT, positioning or a positioning reference signal PRS, and multi IMSI;
a gap priority; and
a to-be-configured gap purpose, where the gap purpose includes: per-user equipment per-UE, per-frequency range 1 per-FR1, per-requency range 2 per-FR2, per-cell group per-CG, or a gap related to a secondary cell group SCG.

Optionally, the to-be-configured gap type includes at least one of the following:
a pre-configured gap;
a coexisting gap or a gap configured with an association relationship;
a network controlled small gap;
an autonomous gap;
a gap used for positioning measurement;
a gap used for a multi IMSI purpose;
an uplink gap; and
a measurement gap.

Optionally, in a case in which the first node is the MN and the second node is the at least one SN, the sending module is specifically configured to:
send, to the at least one SN, gap information of a target gap configured by the MN for a terminal.

Optionally, the gap information is carried in a measurement gap configuration measGapConfig.

Optionally, the sending module 501 is specifically configured to:
send a gap activation status message to the at least one SN, where the gap activation status message is used to indicate gap status information of the target gap configured by the MN for the terminal.

Optionally, the sending module 501 is specifically configured to:
send the gap activation status message to the at least one SN periodically or when a gap activation status of the target gap changes.

Optionally, the gap configured by the MN is a gap of a first gap purpose. The first gap purpose includes at least one of the following:
per-user equipment per-UE, per-frequency range 1 per-FR1, per-requency range 2 per-FR2, per-cell group per-CG, and a gap related to a secondary cell group SCG.

Optionally, in NE-DC or NR-DC, a gap purpose of the target gap is per-UE, per-FR1, or per-FR2; and
in EN-DC or NGEN-DC, the gap purpose of the target gap is per-UE or per-FR1.

Optionally, in a case in which the first node is the SN and the second node is the MN, the sending module 501 is specifically configured to:
send a cell group configuration CG-Config to the MN, where the cell group configuration carries gap information of a target gap configured for a terminal under a request of the SN.

Optionally, in EN-DC or NGEN-DC, a gap purpose of the target gap configured under the request of the SN is per-FR2.

Optionally, the sending module 501 is specifically configured to:
in EN-DC, NGEN-DC, or NR-DC, the SN sends the gap type information to the MN by using a measConfigSN, where the CG-Config includes the measConfigSN.

The first gap information transmission apparatus provided in this embodiment of this application can implement the processes implemented by the first node in the method embodiment shown in FIG. 3, and the same technical effects can be achieved. To avoid repetition, details are not described herein again.

The second gap information transmission method provided in the embodiments of this application may be performed by a second gap information transmission apparatus. In the embodiments of this application, an example in which the second gap information transmission apparatus performs the second gap information transmission method is used to describe the second gap information transmission apparatus provided in the embodiments of this application.

Refer to FIG. 6. A second gap information transmission apparatus provided in an embodiment of this application may be applied to a second node. The second node may be the MN/SN or the CU/DU illustrated in FIG. 4, or may be a network node of another type. This is not specifically limited herein. As shown in FIG. 6, the second gap information transmission apparatus 600 may include the following module:
a receiving module 601, configured to receive gap information from a first node, where the gap information includes at least one of gap status information and gap type information.

Optionally, the second gap information transmission apparatus 600 further includes:
a determining module, configured to determine a gap state of a target gap and/or a gap configuration based on the gap information, where the target gap is a gap configured by the first node for a terminal or a gap configured for the terminal under a request of the first node.

Optionally, the determining module includes:
a determining unit, configured to determine the gap configuration based on the gap type information; and/or
an execution unit, configured to perform at least one of the following operations based on the gap status information:
determining a gap state of the target gap, where the gap state includes any one of an activated state, a deactivated state, and a dynamic gap;
determining whether there is a conflict in the target gap;
ignoring the target gap;
dropping the target gap; and
transmitting data during the target gap.

Optionally, the first node is one of a master node MN and at least one secondary node SN, and the second node is the other of the MN and the at least one SN; or
the first node is one of a control unit CU and at least one data unit DU, and the second node is the other of the CU and the at least one DU.

Optionally, the gap status information includes at least one of the following:
a gap state; and
gap-related configuration information, where
the gap state is used to indicate an activated/a deactivated state of the target gap, or the gap state is used to indicate that the target gap is a dynamic gap; and
the target gap is a gap configured by the first node, or the target gap is a gap configured by the second node under a request of the first node.

Optionally, the gap-related configuration information includes at least one of the following:
a measurement frequency associated with the target gap;
a measurement object associated with the target gap;
a gap purpose of the target gap, where the gap purpose includes: per-user equipment per-UE, per-frequency range 1 per-FR1, per-requency range 2 per-FR2, per-cell group per-CG, or a gap related to a secondary cell group SCG;
gap configuration information of the target gap;
an identifier of the target gap; and
a priority of the target gap.

Optionally, the gap state includes at least one of the following:
first state information, used to indicate whether the target gap is a pre-configured gap;
second state information, used to indicate whether the target gap is a dynamic gap;
third state information, used to indicate whether the target gap is droppable;
fourth state information, used to indicate a transmission state during the target gap;
a first gap state, used to indicate a real-time activated/deactivated state of the target gap; and
a second gap state, used to indicate an initial activated/deactivated state of the target gap.

Optionally, the gap type information includes at least one of the following:
a to-be-configured gap type;
an association indication, used to indicate whether to associate the target gap with an association object or at least one measurement frequency;
an association object, where the association object includes at least one of the following: a radio access technology RAT, positioning or a positioning reference signal PRS, and multi IMSI;
a gap priority; and
a to-be-configured gap purpose, where the gap purpose includes: per-user equipment per-UE, per-frequency range 1 per-FR1, per-requency range 2 per-FR2, per-cell group per-CG, or a gap related to a secondary cell group SCG.

Optionally, the to-be-configured gap type includes at least one of the following:
a pre-configured gap;
a coexisting gap or a gap configured with an association relationship;
a network controlled small gap;
an autonomous gap;
a gap used for positioning measurement;
a gap used for a multi IMSI purpose;
an uplink gap; and
a measurement gap.

The second gap information transmission apparatus provided in this embodiment of this application can implement the processes implemented by the second node in the method embodiment shown in FIG. 4, and the same technical effects can be achieved. To avoid repetition, details are not described herein again.

Optionally, as shown in FIG. 7, an embodiment of this application further provides a communication device 700, including a processor 701 and a memory 702. The memory 702 stores a program or instructions that can be run on the processor 701. For example, when the communication device 700 is a first node, and when the program or instructions are executed by the processor 701, the steps in the method embodiment shown in FIG. 3 are implemented, and the same technical effects can be achieved. When the communication device 700 is a second node, and when the program or instructions are executed by the processor 701, the steps in the method embodiment shown in FIG. 4 are implemented, and the same technical effects can be achieved. To avoid repetition, details are not described herein again.

An embodiment of this application further provides a network side device. The network side device includes a processor and a communication interface. In a case in which the network side device is a first node, the communication interface is configured to send gap information to a second node, where the gap information includes at least one of gap status information and gap type information; or in a case in which the network side device is a second node, the communication interface is configured to receive gap information from a first node, where the gap information includes at least one of gap status information and gap type information.

The network side device embodiment corresponds to the method embodiment shown in FIG. 3 or FIG. 4. The implementation processes and implementations of the foregoing method embodiments are all applicable to the network side device embodiment, and the same technical effects can be achieved.

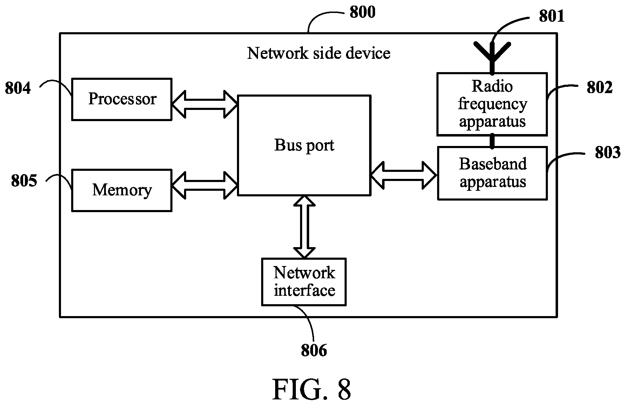

Specifically, an embodiment of this application further provides a network side device. As shown in FIG. 8, the network side device 800 includes: an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information through the antenna 801, and sends the received information to the baseband apparatus 803 for processing. In a downlink direction, the baseband apparatus 803 processes to-be-sent information, and sends the information to the radio frequency apparatus 802. The radio frequency apparatus 802 sends the received information through the antenna 801 after processing the received information.

The method performed by the first node or the second node in the foregoing embodiments may be implemented in the baseband apparatus 803. The baseband apparatus 803 includes a baseband processor.

The baseband apparatus 803 may include, for example, at least one baseband board. The baseband board is provided with a plurality of chips. As shown in FIG. 8, one of the chips may be, for example, a baseband processor, and is connected to the memory 805 through a bus port, to invoke the program in the memory 805 to perform the operations of the network device shown in the foregoing method embodiments.

The network side device may further include a network interface 806. The interface may be, for example, a common public radio interface (Common Public Radio Interface, CPRI).

Specifically, the network side device 800 in this embodiment of the present invention further includes instructions or a program that is stored on the memory 805 and that can be run on the processor 804. The processor 804 invokes the instructions or program in the memory 805 to perform the method performed by the modules shown in FIG. 5 or FIG. 6, and the same technical effects can be achieved. To avoid repetition, details are not described herein again.

An embodiment of this application further provides a readable storage medium. The readable storage medium stores a program or instructions. When the program or instructions are executed by a processor, the processes in the method embodiment shown in FIG. 3 or FIG. 4 are implemented, and the same technical effects can be achieved. To avoid repetition, details are not described herein again.

The processor is the processor in the terminal in the foregoing embodiment. The readable storage medium includes a computer-readable storage medium, for example, a computer read-only memory memory (Read-Only Memory, ROM), a random access memory (Random Access Memory, RAM), a floppy disk, or an optical disc.

An embodiment of this application further provides a chip. The chip includes a processor and a communication interface. The communication interface is coupled to the processor. The processor is configured to run a program or instructions to implement the processes in the method embodiment shown in FIG. 3 or FIG. 4, and the same technical effects can be achieved. To avoid repetition, details are not described herein again.

It should be understood that the chip in this embodiment of this application may also be referred to as a system-level chip, a system chip, a chip system, a system-on-a-chip chip, or the like.

An embodiment of this application further provides a computer program/program product. The computer program/program product is stored in a storage medium, the computer program/program product is executed by at least one processor to implement the processes in the method embodiment shown in FIG. 3 or FIG. 4, and the same technical effects can be achieved. To avoid repetition, details are not described herein again. An embodiment of this application further provides a wireless communication system. The wireless communication system includes a first node and a second node. The first node may be configured to perform a step of the gap information transmission method shown in FIG. 3. The second node may be configured to perform a step of the gap information transmission method shown in FIG. 4.

An embodiment of this application further provides a communication device.

It should be noted that in this specification, the term "comprise", "include", or any other variants thereof are intended to encompass in a non-exclusive mode, so that a process, a method, an object, or an apparatus including a series of elements not only includes those elements, but also includes other elements that are not explicitly listed, or elements that are inherent to such a process, a method, an object, or an apparatus. An element defined by the phrase "including a ..." does not exclude the presence of the same element in the process, method, object, or apparatus including the element, without more restrictions. In addition, it should be noted that the scopes of the methods and apparatus in the embodiments of this application are not limited to performing functions in the shown or discussed order, but may also include performing functions in a substantially simultaneous manner or in a reverse order depending on involved functions. For example, the described methods may be performed in an order different from that described, and various steps may be added, omitted, or combined. Furthermore, features described with reference to some examples may be combined in other examples.

Through the foregoing descriptions of the implementations, a person skilled in the art can clearly understand that the methods in the foregoing embodiments can be implemented by software plus a necessary general hardware platform, and certainly, can also be implemented by hardware, but in many cases the former is the better implementation. Based on such understanding, a part, that is essentially or contributes to an existing technology, of the technical solutions in this application can be embodied in a form of a computer software product. The computer software product is stored in a storage medium (such as a ROM/RAM, a floppy disk, or an optical disc), including several instructions to enable a terminal (which may be a mobile phone, a computer, a server, an air conditioner, a network device, or the like) to execute the methods described in the various embodiments of this application.

The embodiments of this application are described above with reference to the accompanying drawings. However, this application is not limited to the foregoing specific implementations. The foregoing specific implementations are only illustrative and not restrictive. Inspired by this application, a person of ordinary skill in the art can further make many forms without departing from the purpose of this application and the scope protected by the claims, all of which fall within the protection scope of this application.

## Claims

1. A gap information transmission method, comprising:
sending, by a first node, gap information to a second node, wherein the gap information comprises at least one of gap status information and gap type information.

2. The method according to claim 1, wherein the first node is one of a master node MN and at least one secondary node SN, and the second node is the other of the MN and the at least one SN; or
the first node is one of a control unit CU and at least one data unit DU, and the second node is the other of the CU and the at least one DU.

3. The method according to claim 1 or 2, wherein the gap status information comprises at least one of the following:
a gap state; and
gap-related configuration information, wherein
the gap state is used to indicate an activated/a deactivated state of a target gap, or the gap state is used to indicate that the target gap is a dynamic gap; and
the target gap is a gap configured by the first node, or the target gap is a gap configured by the second node under a request of the first node.

4. The method according to claim 3, wherein the gap-related configuration information comprises at least one of the following:
a measurement frequency associated with the target gap;
a measurement object associated with the target gap;
a gap purpose of the target gap, wherein the gap purpose comprises: per-user equipment UE, per-frequency rang 1FR1, per-frequency range 2 FR2, per-cell group CG, or a gap related to a secondary cell group SCG;
gap configuration information of the target gap;
an identifier of the target gap; and
a priority of the target gap.

5. The method according to claim 3, wherein the gap state comprises at least one of the following:
first state information, used to indicate whether the target gap is a pre-configured gap;
second state information, used to indicate whether the target gap is a dynamic gap;
third state information, used to indicate whether the target gap is droppable;
fourth state information, used to indicate a transmission state during the target gap;
a first gap state, used to indicate a real-time activated/deactivated state of the target gap; and
a second gap state, used to indicate an initial activated/deactivated state of the target gap.

6. The method according to claim 1 or 2, wherein the gap type information comprises at least one of the following:
a to-be-configured gap type;
an association indication, used to indicate whether to associate the target gap with an association object or at least one measurement frequency;
an association object, wherein the association object comprises at least one of the following: a radio access technology RAT, positioning or a positioning reference signal PRS, and multi IMSI;
a gap priority; and
a to-be-configured gap purpose, wherein the gap purpose comprises: per-user equipment per-UE, per-frequency range 1 per-FR1, per-requency range 2 per-FR2, per-cell group per-CG, or a gap related to a secondary cell group SCG.

7. The method according to claim 6, wherein the to-be-configured gap type comprises at least one of the following:
a pre-configured gap;
a coexisting gap or a gap configured with an association relationship;
a network controlled small gap;
an autonomous gap;
a gap used for positioning measurement;
a gap used for a multi IMSI purpose;
an uplink gap; and
a measurement gap.

8. The method according to claim 2, wherein in a case in which the first node is the MN and the second node is the at least one SN, the sending, by a first node, gap information to a second node comprises:
sending, by the MN to the at least one SN, gap information of a target gap configured by the MN for a terminal.

9. The method according to claim 8, wherein the gap information is carried in a measurement gap configuration measGapConfig.

10. The method according to claim 8, wherein the sending, by the MN to the at least one SN, gap information of a target gap configured by the MN for a terminal comprises:
sending, by the MN, a gap activation status message to the at least one SN, wherein the gap activation status message is used to indicate gap status information of the target gap configured by the MN for the terminal.

11. The method according to claim 10, wherein the sending, by the MN, a gap activation status message to the at least one SN comprises:
sending, by the MN, the gap activation status message to the at least one SN periodically or when a gap activation status of the target gap changes.

12. The method according to any one of claims 8 to 11, wherein a gap configured by the MN is a gap of a first gap purpose, and the first gap purpose comprises at least one of the following:
per-user equipment per-UE, per-frequency range 1 per-FR1, per-requency range 2 per-FR2, per-cell group per-CG, and a gap related to a secondary cell group SCG.

13. The method according to any one of claims 8 to 11, wherein in NE-DC or NR-DC, a gap purpose of the target gap is per-UE, per-FR1, or per-FR2; and
in EN-DC or NGEN-DC, the gap purpose of the target gap is per-UE or per-FR1.

14. The method according to claim 2, wherein in a case in which the first node is the SN and the second node is the MN, the sending, by a first node, gap information to a second node comprises:
sending, by the SN, a cell group configuration CG-Config to the MN, wherein the cell group configuration carries gap information of a target gap configured for a terminal under a request of the SN.

15. The method according to claim 14, wherein in EN-DC or NGEN-DC, a gap purpose of the target gap configured under the request of the SN is per-FR2.

16. The method according to claim 14, wherein the sending, by a first node, gap information to a second node comprises:
in EN-DC, NGEN-DC, or NR-DC, sending, by the SN, the gap type information to the MN by using a measConfigSN, wherein the CG-Config comprises the measConfigSN.

17. A gap information transmission apparatus, applied to a first node, wherein the apparatus comprises:
a sending module, configured to send gap information to a second node, wherein the gap information comprises at least one of gap status information and gap type information.

18. The apparatus according to claim 17, wherein the first node is one of a master node MN and at least one secondary node SN, and the second node is the other of the MN and the at least one SN; or
the first node is one of a control unit CU and at least one data unit DU, and the second node is the other of the CU and the at least one DU.

19. The apparatus according to claim 17 or 18, wherein the gap status information comprises at least one of the following:
a gap state; and
gap-related configuration information, wherein
the gap state is used to indicate an activated/a deactivated state of a target gap, or the gap state is used to indicate that the target gap is a dynamic gap; and
the target gap is a gap configured by the first node, or the target gap is a gap configured by the second node under a request of the first node.

20. The apparatus according to claim 19, wherein the gap-related configuration information comprises at least one of the following:
a measurement frequency associated with the target gap;
a measurement object associated with the target gap;
a gap purpose of the target gap, wherein the gap purpose comprises: per-user equipment per-UE, per-frequency range 1 per-FR1, per-requency range 2 per-FR2, per-cell group per-CG, or a gap related to a secondary cell group SCG;
gap configuration information of the target gap;
an identifier of the target gap; and
a priority of the target gap.

21. The apparatus according to claim 19, wherein the gap state comprises at least one of the following:
first state information, used to indicate whether the target gap is a pre-configured gap;
second state information, used to indicate whether the target gap is a dynamic gap;
third state information, used to indicate whether the target gap is droppable;
fourth state information, used to indicate a transmission state during the target gap;
a first gap state, used to indicate a real-time activated/deactivated state of the target gap; and
a second gap state, used to indicate an initial activated/deactivated state of the target gap.

22. The apparatus according to claim 17 or 18, wherein the gap type information comprises at least one of the following:
a to-be-configured gap type;
an association indication, used to indicate whether to associate the target gap with an association object or at least one measurement frequency;
an association object, wherein the association object comprises at least one of the following: a radio access technology RAT, positioning or a positioning reference signal PRS, and multi IMSI;
a gap priority; and
a to-be-configured gap purpose, wherein the gap purpose comprises: per-user equipment per-UE, per-frequency range 1 per-FR1, per-requency range 2 per-FR2, per-cell group per-CG, or a gap related to a secondary cell group SCG.

23. The apparatus according to claim 22, wherein the to-be-configured gap type comprises at least one of the following:
a pre-configured gap;
a coexisting gap or a gap configured with an association relationship;
a network controlled small gap;
an autonomous gap;
a gap used for positioning measurement;
a gap used for a multi IMSI purpose;
an uplink gap; and
a measurement gap.

24. The apparatus according to claim 18, wherein in a case in which the first node is the MN and the second node is the at least one SN, the sending module is specifically configured to:
send, to the at least one SN, gap information of a target gap configured by the MN for a terminal.

25. The apparatus according to claim 24, wherein the gap information is carried in a measurement gap configuration measGapConfig.

26. The apparatus according to claim 24, wherein the sending module is specifically configured to:
send a gap activation status message to the at least one SN, wherein the gap activation status message is used to indicate gap status information of the target gap configured by the MN for the terminal.

27. The apparatus according to claim 26, wherein the sending module is specifically configured to:
send the gap activation status message to the at least one SN periodically or when a gap activation status of the target gap changes.

28. The apparatus according to any one of claims 24 to 27, wherein a gap configured by the MN is a gap of a first gap purpose, and the first gap purpose comprises at least one of the following:
per-user equipment per-UE, per-frequency range 1 per-FR1, per-requency range 2 per-FR2, per-cell group per-CG, and a gap related to a secondary cell group SCG.

29. The apparatus according to any one of claims 24 to 27, wherein in NE-DC or NR-DC, a gap purpose of the target gap is per-UE, per-FR1, or per-FR2; and
in EN-DC or NGEN-DC, the gap purpose of the target gap is per-UE or per-FR1.

30. The apparatus according to claim 18, wherein in a case in which the first node is the SN and the second node is the MN, the sending module is specifically configured to:
send a cell group configuration CG-Config to the MN, wherein the cell group configuration carries gap information of a target gap configured for a terminal under a request of the SN.

31. The apparatus according to claim 30, wherein in EN-DC or NGEN-DC, a gap purpose of the target gap configured under the request of the SN is per-FR2.

32. The apparatus according to claim 30, wherein the sending module is specifically configured to:
in EN-DC, NGEN-DC, or NR-DC, send, by the SN, the gap type information to the MN by using a measConfigSN, wherein the CG-Config comprises the measConfigSN.

33. A gap information transmission method, comprising:
receiving, by a second node, gap information from a first node, wherein the gap information comprises at least one of gap status information and gap type information.

34. The method according to claim 33, further comprising:
determining, by the second node, a gap state of a target gap and/or a gap configuration based on the gap information, wherein the target gap is a gap configured by the first node for a terminal or a gap configured for the terminal under a request of the first node.

35. The method according to claim 34, wherein the determining, by the second node, a gap state and/or a gap configuration based on the gap information comprises:
determining, by the second node, the gap configuration based on the gap type information; and/or
performing, by the second node, at least one of the following operations based on the gap status information:
determining a gap state of the target gap, wherein the gap state comprises any one of an activated state, a deactivated state, and a dynamic gap;
determining whether there is a conflict in the target gap;
ignoring the target gap;
dropping the target gap; and
transmitting data during the target gap.

36. The method according to any one of claims 33 to 35, wherein the first node is one of a master node MN and at least one secondary node SN, and the second node is the other of the MN and the at least one SN; or
the first node is one of a control unit CU and at least one data unit DU, and the second node is the other of the CU and the at least one DU.

37. The method according to any one of claims 33 to 35, wherein the gap status information comprises at least one of the following:
a gap state; and
gap-related configuration information, wherein
the gap state is used to indicate an activated/a deactivated state of the target gap, or the gap state is used to indicate that the target gap is a dynamic gap; and
the target gap is a gap configured by the first node, or the target gap is a gap configured by the second node under a request of the first node.

38. The method according to claim 37, wherein the gap-related configuration information comprises at least one of the following:
a measurement frequency associated with the target gap;
a measurement object associated with the target gap;
a gap purpose of the target gap, wherein the gap purpose comprises: per-user equipment per-UE, per-frequency range 1 per-FR1, per-requency range 2 per-FR2, per-cell group per-CG, or a gap related to a secondary cell group SCG;
gap configuration information of the target gap;
an identifier of the target gap; and
a priority of the target gap.

39. The method according to claim 37, wherein the gap state comprises at least one of the following:
first state information, used to indicate whether the target gap is a pre-configured gap;
second state information, used to indicate whether the target gap is a dynamic gap;
third state information, used to indicate whether the target gap is droppable;
fourth state information, used to indicate a transmission state during the target gap;
a first gap state, used to indicate a real-time activated/deactivated state of the target gap; and
a second gap state, used to indicate an initial activated/deactivated state of the target gap.

40. The method according to any one of claims 33 to 35, wherein the gap type information comprises at least one of the following:
a to-be-configured gap type;
an association indication, used to indicate whether to associate the target gap with an association object or at least one measurement frequency;
an association object, wherein the association object comprises at least one of the following: a radio access technology RAT, positioning or a positioning reference signal PRS, and multi IMSI;
a gap priority; and
a to-be-configured gap purpose, wherein the gap purpose comprises: per-user equipment per-UE, per-frequency range 1 per-FR1, per-requency range 2 per-FR2, per-cell group per-CG, or a gap related to a secondary cell group SCG.

41. The method according to claim 40, wherein the to-be-configured gap type comprises at least one of the following:
a pre-configured gap;
a coexisting gap or a gap configured with an association relationship;
a network controlled small gap;
an autonomous gap;
a gap used for positioning measurement;
a gap used for a multi IMSI purpose;
an uplink gap; and
a measurement gap.

42. A gap information transmission apparatus, applied to a second node, wherein the apparatus comprises:
a receiving module, configured to receive gap information from a first node, wherein the gap information comprises at least one of gap status information and gap type information.

43. The apparatus according to claim 42, further comprising:
a determining module, configured to determine a gap state of a target gap and/or a gap configuration based on the gap information, wherein the target gap is a gap configured by the first node for a terminal or a gap configured for the terminal under a request of the first node.

44. The apparatus according to claim 43, wherein the determining module comprises:
a determining unit, configured to determine the gap configuration based on the gap type information; and/or
an execution unit, configured to perform at least one of the following operations based on the gap status information:
determining a gap state of the target gap, wherein the gap state comprises any one of an activated state, a deactivated state, and a dynamic gap;
determining whether there is a conflict in the target gap;
ignoring the target gap;
dropping the target gap; and
transmitting data during the target gap.

45. The apparatus according to any one of claims 42 to 44, wherein the first node is one of a master node MN and at least one secondary node SN, and the second node is the other of the MN and the at least one SN; or
the first node is one of a control unit CU and at least one data unit DU, and the second node is the other of the CU and the at least one DU.

46. The apparatus according to any one of claims 42 to 44, wherein the gap status information comprises at least one of the following:
a gap state; and
gap-related configuration information, wherein
the gap state is used to indicate an activated/a deactivated state of the target gap, or the gap state is used to indicate that the target gap is a dynamic gap; and
the target gap is a gap configured by the first node, or the target gap is a gap configured by the second node under a request of the first node.

47. The apparatus according to claim 46, wherein the gap-related configuration information comprises at least one of the following:
a measurement frequency associated with the target gap;
a measurement object associated with the target gap;
a gap purpose of the target gap, wherein the gap purpose comprises: per-user equipment per-UE, per-frequency range 1 per-FR1, per-requency range 2 per-FR2, per-cell group per-CG, or a gap related to a secondary cell group SCG;
gap configuration information of the target gap;
an identifier of the target gap; and
a priority of the target gap.

48. The apparatus according to claim 46, wherein the gap state comprises at least one of the following:
first state information, used to indicate whether the target gap is a pre-configured gap;
second state information, used to indicate whether the target gap is a dynamic gap;
third state information, used to indicate whether the target gap is droppable;
fourth state information, used to indicate a transmission state during the target gap;
a first gap state, used to indicate a real-time activated/deactivated state of the target gap; and
a second gap state, used to indicate an initial activated/deactivated state of the target gap.

49. The apparatus according to any one of claims 42 to 44, wherein the gap type information comprises at least one of the following:
a to-be-configured gap type;
an association indication, used to indicate whether to associate the target gap with an association object or at least one measurement frequency;
an association object, wherein the association object comprises at least one of the following: a radio access technology RAT, positioning or a positioning reference signal PRS, and multi IMSI;
a gap priority; and
a to-be-configured gap purpose, wherein the gap purpose comprises: per-user equipment per-UE, per-frequency range 1 per-FR1, per-requency range 2 per-FR2, per-cell group per-CG, or a gap related to a secondary cell group SCG.

50. The apparatus according to claim 49, wherein the to-be-configured gap type comprises at least one of the following:
a pre-configured gap;
a coexisting gap or a gap configured with an association relationship;
a network controlled small gap;
an autonomous gap;
a gap used for positioning measurement;
a gap used for a multi IMSI purpose;
an uplink gap; and
a measurement gap.

51. A network side device, comprising a processor and a memory, wherein the memory stores a program or instructions that can be run on the processor, and when the program or instructions are executed by the processor, a step of the gap information transmission method according to any one of claims 1 to 16 is implemented, or a step of the gap information transmission method according to any one of claims 33 to 41 is implemented.

52. A readable storage medium, wherein the readable storage medium stores a program or instructions, and when the program or instructions are executed by the processor, a step of the gap information transmission method according to any one of claims 1 to 16 is implemented, or a step of the gap information transmission method according to any one of claims 33 to 41 is implemented.
